# EUROPEAN PATENT SPECIFICATION

(11) **EP 3 203 187 B1**
(45) Date of publication and mention of the grant of the patent: **29.05.2019**
(21) Application number: 16002767.8
(22) Date of filing: 30.12.2016
(51) Int. Cl.: G01C 21/34, G08G 1/0968, G08G 1/01

(54) **NAVIGATION SYSTEM AND CENTER DEVICE**
NAVIGATIONSSYSTEM UND ZENTRALE VORRICHTUNG
SYSTÈME DE NAVIGATION ET DISPOSITIF CENTRAL

(30) Priority: 03.02.2016 JP 2016018720
(43) Date of publication of application: 09.08.2017
(73) Proprietor: Hitachi, Ltd., Chiyoda-ku, Tokyo 100-8280 (JP)
(72) Inventor: Suzuki, Kenji, Tokyo, 100-8280 (JP); Izumi, Yoshifumi, Tokyo, 100-8280 (JP); Isomura, Yosuke, Tokyo, 100-8280 (JP)
(74) Representative: Strehl Schübel-Hopf & Partner

(56) References cited:
- EP-A1- 2 650 649
- EP-A2- 1 906 373
- WO-A1-2015/104383

## Description

The present invention relates to a navigation system and a center device.

A route search function through which a route to a destination and a travel time length are calculated and are provided to a user is an essential function of a car navigation device. In a route calculation method commonly adopted in such a route search in the related art, the vehicle position detected at the time of the route search is designated as a start point and the route to a destination through which the vehicle will be able to travel to the destination with a minimum of travel time or over a minimum distance is calculated within the car navigation device.

There is a technology known in the related art that provides route guidance by raising the cost of a link where an accident has occurred in the past so as to ensure that the route does not include the link where the accident occurred (see Japanese Laid Open Patent Publication No. 2012-063360).

The art taught in Japanese Laid Open Patent Publication No. 2012-063360 does not allow route guidance to be provided by avoiding a road where traffic is blocked due to a cause other than a traffic accident, such as flooding or a landslide.

WO 2015/1043 83 A1 discloses a method of detecting the closure of a navigable element. The navigable element is identified as being potentially closed, subject to one or more optional validation steps, when a determined elapsed time since a device was last detected on the navigable element exceeds an expected time interval.

Another conventional device is described in EP 1 906 373 A2. The present invention is defined by the subject-matter of present claim 1. The dependent claims relate to preferred embodiments.

### BRIEF DESCRIPTION OF THE DRAWINGS

Fig. 1 is a schematic illustration of a navigation system achieved in an embodiment.
Fig. 2 is a diagram presenting a structural example of the navigation system achieved in the embodiment.
Fig. 3 presents a flowchart of processing that may be executed in an in-vehicle terminal device in the embodiment.
Fig. 4 presents a flowchart of processing that may be executed in the center device in the embodiment.
Fig. 5 presents an example of data that may be accumulated in the travel history DB in the embodiment.
Fig. 6 presents an example of processing that may be executed by the travel-completion decision-making/travel-completion information generation unit in the embodiment.
Fig. 7 illustrates how the travel-completion decision-making/travel-completion information generation unit in the embodiment may execute the processing.
Fig. 8 presents an example of data that may be accumulated in the individual link DB in the embodiment.
Fig. 9 presents an example of data that may be accumulated in the interlink DB in the embodiment.
Fig. 10 presents a flowchart of route search processing that may be executed in the center device in the embodiment.
Fig. 11 presents an example of a display screen that may be brought up at the display unit in the embodiment.
Fig. 12 presents another example of a display screen that may be brought up at the display unit in the embodiment.
Fig. 13 presents yet another example of a display screen that may be brought up at the display unit in the embodiment.

### DESCRIPTION OF EMBODIMENTS

In reference to drawings, the navigation system achieved in an embodiment of the present invention will be described. In this navigation system, route information generated through a search executed in a center device in response to a route search request issued from an in-vehicle terminal device is transmitted to the in-vehicle terminal device and is provided to the driver. The center device executes a route search based upon actual travel-completed records collected from a plurality of vehicles. For instance, the route search may be executed based upon information indicating a traveling-enabled link, information indicating a traveling-disabled link, information indicating interlink traveling-enabled links, information indicating interlink traveling-disabled links and the like, collected as travel-completion data.

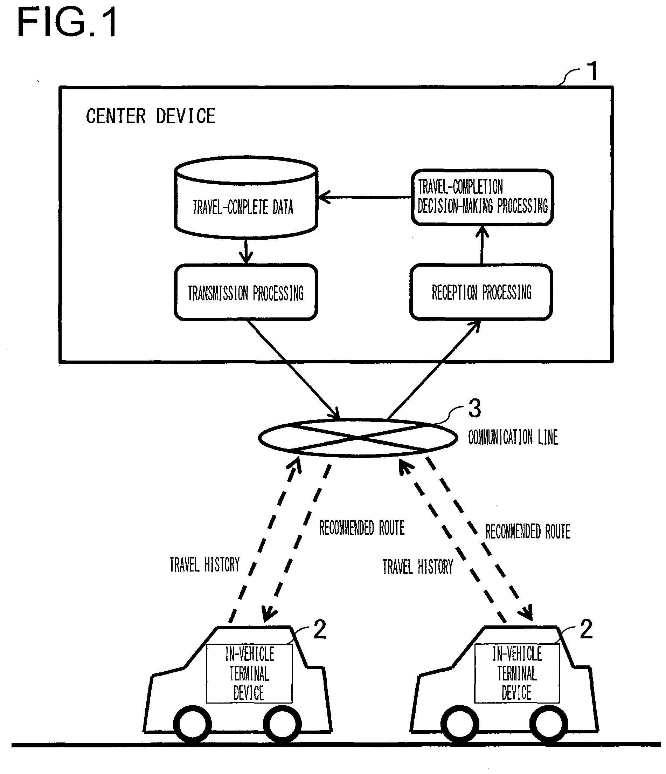

Fig. 1 schematically illustrates the navigation system achieved in the embodiment of the present invention. The navigation system in Fig. 1 is configured with a center device 1 and a plurality of in-vehicle terminal devices 2, each installed in one of a plurality of moving bodies (such as vehicles).

The center device 1 and the in-vehicle terminal devices 2 installed in the individual moving bodies 20 are connected with each other via a communication line 3. The communication line 3 may be a wireless communication network such as a mobile telephone network, a wired communication network such as the Internet or the like.

The center device 1 receives probe data transmitted from the in-vehicle terminal device 2 installed in each moving body 20, analyzes the probe data and accumulates the analysis results as a set of travel-completion information for the particular moving body 20. In response to a request issued from an in-vehicle terminal device 2, the center device 1 calculates a recommended route by taking into consideration sets of the travel-completion information and delivers the recommended route to the in-vehicle terminal device 2 via the communication line 3. The recommended route delivered to the in-vehicle terminal device 2 is then displayed at the in-vehicle terminal device 2 so as to provide route guidance to the driver of the moving body 20.

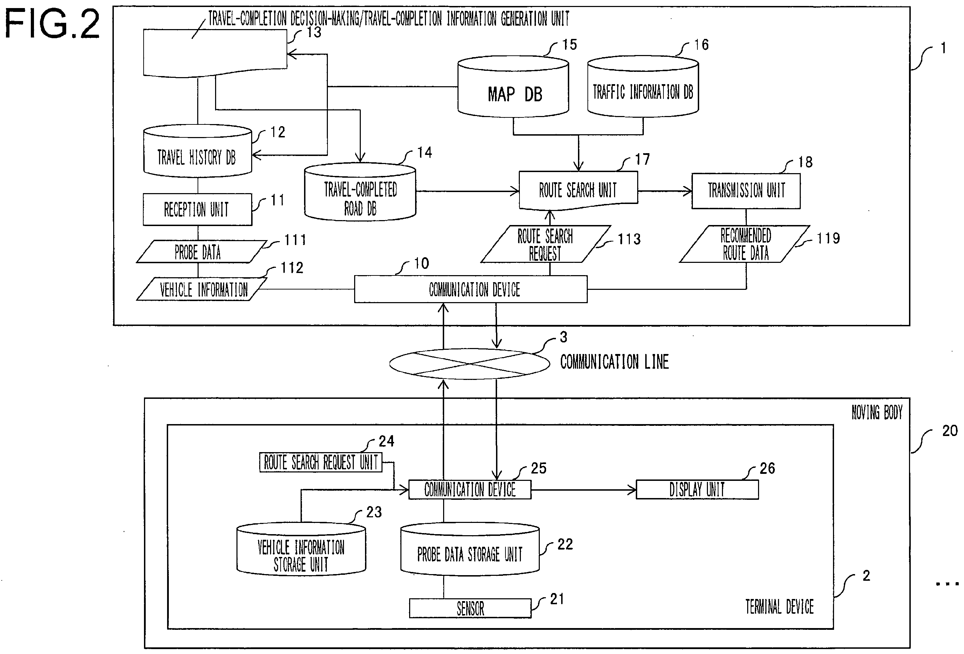

Fig. 2 is a block diagram presenting a structural example of the navigation system achieved in the embodiment of the present invention. It is to be noted that while Fig. 2 only shows a single in-vehicle terminal device 2 among the plurality of in-vehicle terminal devices 2 configuring part of the navigation system as a typical example, other in-vehicle terminal devices 2 assume similar structures.

The in-vehicle terminal device 2 comprises a sensor 21, a probe data storage unit 22, a vehicle information storage unit 23, a route search request unit 24, a communication device 25 and a display unit 26.

The sensor 21 detects the current position of the moving body 20, the traveling speed, the traveling direction of the moving body 20, the current time point, a braking operation condition and the like. The sensor 21 is configured with various types of sensors such as a GPS sensor, an acceleration sensor and an azimuth sensor, which are installed as standard components of an in-vehicle navigation device in the related art. The detection results indicating the traveling conditions of the moving body 20, obtained at the sensor 21, are output from the sensor 21 to the probe data storage unit 22.

The probe data storage unit 22 generates information pertaining to the traveling conditions of the moving body 20 based upon the detection results provided by the sensor 21 and stores the information thus generated as probe data. The information pertaining to the traveling conditions of the moving body 20 is information indicating, for instance, the position of the moving body 20, the traveling speed, the traveling direction in which the moving body 20 is traveling, the current time point and the braking operation condition.

The vehicle information storage unit 23 stores vehicle information pertaining to characteristic features of the moving body 20 in which the in-vehicle terminal device 2 is installed. The vehicle information indicating, for instance, a vehicle type (large, standard, compact, etc.), a vehicle height, a vehicle width and the like, pertaining to the moving body 20, is set and stored in advance. The vehicle information may be, for instance, entered by the driver with any timing, e.g., when power to the in-vehicle terminal device 2 is first turned on or when the moving body 20 is started.

The probe data stored in the probe data storage unit 22 is transmitted to the center device 1 via the communication device 25 after predetermined time intervals. Together with the probe data, the vehicle information stored in the vehicle information storage unit 23 is also transmitted to the center device 1. However once the vehicle information is transmitted from the in-vehicle terminal device 2, it is saved in the center device 1, and for this reason, the vehicle information does not need to be transmitted again unless there is a change from the previously transmitted information.

In response to a specific operation performed by the driver at the in-vehicle terminal device 2, the route search request unit 24 sets search conditions including a destination and search cost conditions (expressway priority/travel-duration priority/distance priority/travel-completion factoring, etc.). In addition, the route search request unit 24 sets a travel-completion period as one of the search conditions. The route search request unit 24 outputs the search conditions thus set to the communication device 25. The search conditions output from the route search request unit 24 to the communication device 25 is transmitted as a route search request to the center device 1 from the communication device 25.

The communication device 25 is engaged in communication between the in-vehicle terminal device 2 and the center device 1. Through the communication enabled via the communication device 25, the probe data and the vehicle information are transmitted from the in-vehicle terminal device 2 to the center device 1 over the predetermined time intervals. In addition, the communication device 25 transmits the search conditions having been set by the route search request unit 24 to the center device 1 as a route search request and also receives route information transmitted from the center device 1 in response. The route information received by the communication device 25 is output to the display unit 26.

Based upon the route information output from the center device 1, the display unit 26 displays the recommended route on a map and provides guidance for the moving body 20 to the destination via the recommended route. It is to be noted that audio directions or the like may be output as needed while guiding the moving body 20 to the destination. In addition, roads along which the moving body 20 is able to travel may be displayed in addition to the route information.

The in-vehicle terminal device 2 described above may be configured with, for instance, a car navigation device, a mobile telephone, a personal computer or a smart phone. The in-vehicle terminal device 2, which includes a CPU, a ROM and a RAM (not shown), is able to achieve the functions of the route search request unit 24 as a program stored in the ROM is opened in the RAM and executed by the CPU.

The center device 1 comprises a communication device 10, a reception unit 11, a travel history DB 12, a travel-completion decision-making/travel-completion information generation unit 13, a travel-completed road DB 14, a map DB 15, a traffic information DB 16, a route search unit 17 and a transmission unit 18. The center device 1, which includes a CPU, a ROM and a RAM (not shown) achieves functions as the travel-completion decision-making/travel-completion information generation unit 13 and the route search unit 17 as a program stored in the ROM is opened in the RAM and executed by the CPU. However, some of, or all of the functions of the travel-completion decision-making/travel-completion information generation unit 13 and the route search unit 17 may be fulfilled in hardware or in an FPGA.

The communication device 10 receives a route search request, probe data and vehicle information transmitted from the in-vehicle terminal device 2 by engaging in communication with the communication device 25 in the in-vehicle terminal device 2. The communication device 10 outputs the probe data 111 and the vehicle information 112 it has received to the reception unit 11. In addition, the route search request 113 having been transmitted from the communication device 25 is output by the communication device 10 to the route search unit 17. The communication device 10 also transmits recommended route data 119, which is output from the transmission unit 18, to the in-vehicle terminal device 2 as route information.

The reception unit 11 receives the probe data 111 and the vehicle information 112 from the in-vehicle terminal device 2 via the communication device 10. The reception unit 11 outputs the probe data 111 and the vehicle information 112 it has received to the travel history DB 12.

The travel history DB 12 is a database (DB) where the probe data 111 and the vehicle information 112 output from the reception unit 11 are accumulated in correlation to each other.

Map data are recorded in the map DB 15. The map data express a roadmap with intersection points at which roads intersect and other specific points on roads defined as nodes and a road connecting one node to another defined as a link. In addition, costs, each determined in correspondence to the length of a given link, are stored for the individual links in the map DB 15.

In the traffic information DB 16, traffic information indicating a required travel time, a speed and a congestion degree and the like for each link unit is recorded. Such traffic information is generated based upon data acquired via road sensors and the like installed along roads and sets of travel-completion information saved in the travel-completed road DB 14. In addition, travel time costs, which reflect the traffic information for the corresponding links, are stored in the traffic information DB 16, each in correspondence to a specific link in the map data stored in the map DB 15. The travel time costs are used when the route search unit 17 executes a route search.

The travel-completion decision-making/travel-completion information generation unit 13 makes a decision based upon the data stored in the travel history DB 12 and the map DB 15 as to whether or not traveling is enabled on a given road and generates each set of travel-completion information based upon the decision-making results. The decision-making processing executed for these purposes will be described in detail later. In the travel-completed road DB 14, sets of the travel-completion information generated based upon the decision-making results provided via the travel-completion decision-making/travel-completion information generation unit 13 are accumulated.

Upon receiving a route search request 113 via the communication device 10, the route search unit 17 searches for a recommended route through a procedure to be described later, based upon the search conditions indicated in the route search request 113 as well as the data in the map DB 15, the traffic information DB 16 and the travel-completed road DB 14. The route search unit 17 then outputs the search results to the transmission unit 18 as recommended route data 119.

The recommended route data 119 output from the search unit 17 are then output by the transmission unit 18 to the communication device 10. The recommended route data 119 output from the transmission unit 18 are then transmitted as route information to the in-vehicle terminal device 2 from the communication device 10.

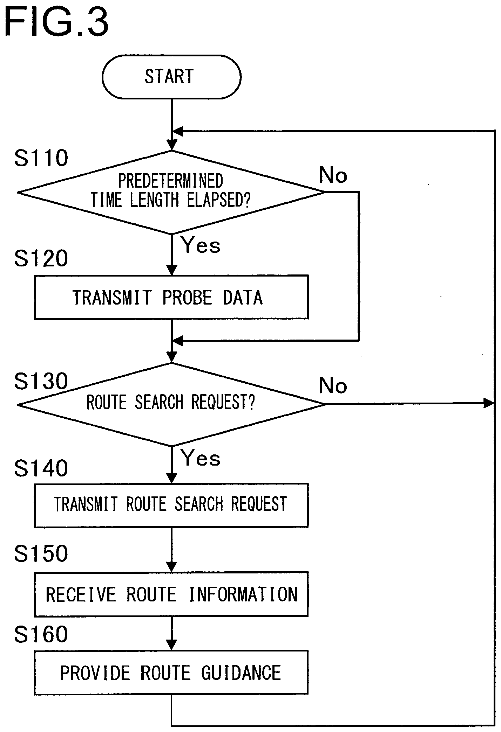

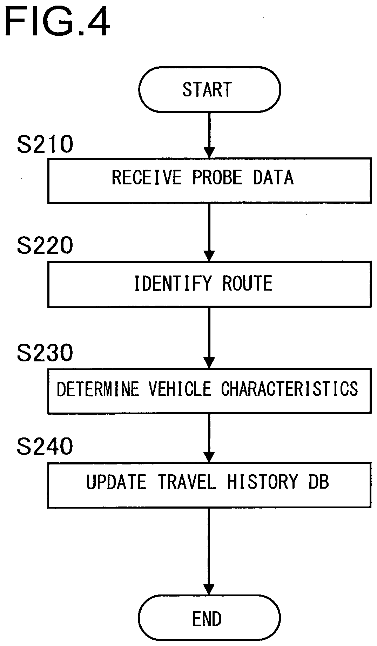

Next, the processing executed by the in-vehicle terminal device 2 and the processing executed by the center device 1 in the navigation system achieved in the embodiment of the present invention will be explained. Fig. 3 presents a flowchart of processing that may be executed in the in-vehicle terminal device 2, whereas Fig. 4 presents a flowchart of processing that may be executed in the center device 1.

An explanation will be provided first in reference to the flowchart in Fig. 3. In step S110, the in-vehicle terminal device 2 makes a decision as to whether or not a predetermined length of time has elapsed since the previous probe data transmission. If a length of time equal to or greater than the predetermined time length has elapsed since probed data were transmitted most recently, the operation proceeds to step S120, whereas if the predetermined length of time has not elapsed, the operation proceeds to step S130 without executing step S120.

In step S120, the in-vehicle terminal device 2 reads out probe data that have not yet been sent from the probe data storage unit 22 and transmits the probe data thus read out to the center device 1 via the communication device 25. At this time, it reads out the vehicle information from the vehicle information storage unit 23 and transmits it together with the probe data to the center device 1 as needed, as explained earlier.

In step S130, the in-vehicle terminal device 2 makes a decision as to whether or not the driver has issued a route search request. If the driver has performed a specific operation at the in-vehicle terminal device 2 to request a route search, it decides that a route search request has been issued and the operation proceeds to step S140. Otherwise, it decides that no route search request has been issued and the operation returns to step S110. Search conditions are determined by the route search request unit 24 in the in-vehicle terminal device 2 based upon, for instance, an input operation or the like performed by the driver. The route search request unit 24 sets conditions such as a destination and the search costs, as explained earlier. It is to be noted that predetermined search cost conditions may be used.

In step S140, the in-vehicle terminal device 2 transmits the route search request to the center device 1. As information indicating the search conditions is output from the route search request unit 24 to the communication device 25, the information indicating the search conditions is transmitted as the route search request to the center device 1 from the communication device 25. In step S150, the in-vehicle terminal device 2 receives, via the communication device 25, route information transmitted from the center device 1 in response to the route search request having been transmitted in step S140. The route information thus received is output from the communication device 25 to the display unit 26.

In step S160, the in-vehicle terminal device 2 guides the moving body 20 to the destination based upon the route information having been received. The in-vehicle terminal device 2 provides route guidance for the moving body 20 by, for instance, displaying the route indicated in the received route information on a map at the display unit 26 or outputting audio guidance as needed. Once the processing in step S160 is executed, the in-vehicle terminal device 2 returns to step S110 and repeatedly executes the processing described above.

An explanation will be provided in reference to the flowchart in Fig. 4 next. In step S210, the center device 1 receives, via the communication device 10, the probe data transmitted from the in-vehicle terminal device 2. If vehicle information has been transmitted from the in-vehicle terminal device 2 together with the probe data, it also receives the vehicle information. The probe data and the vehicle information having been received are output from the communication device 10 to the reception unit 11.

In step S220, the center device 1 identifies a route included in the probe data having been received in step S210. For instance, it may identify the route extending from the start point to a destination indicated in the probe data as a link string based upon information indicating latitudes/longitudes, time points, traveling speeds and advancing directions in the probe data and the map data recorded in the map DB.

In step S230, the center device 1 determines vehicle characteristics corresponding to the probe data having been received in step S210. The vehicle characteristics may be, for instance, the vehicle type, the vehicle width, the vehicle length and the like pertaining to the moving body 20. Based upon the vehicle information transmitted from the in-vehicle terminal device 2, the center device 1 is able to determine the vehicle characteristics of the moving body 20 having the particular in-vehicle terminal device 2 that transmitted the probe data installed therein.

In step S240, the center device 1 saves information pertaining to the route determined in step S220 and information pertaining to the vehicle characteristics determined in step S230 into the travel history DB 12 in correlation to each other and thus updates the travel history DB 12. Once the travel history DB 12 is updated, the center device 1 ends the processing shown in Fig. 4.

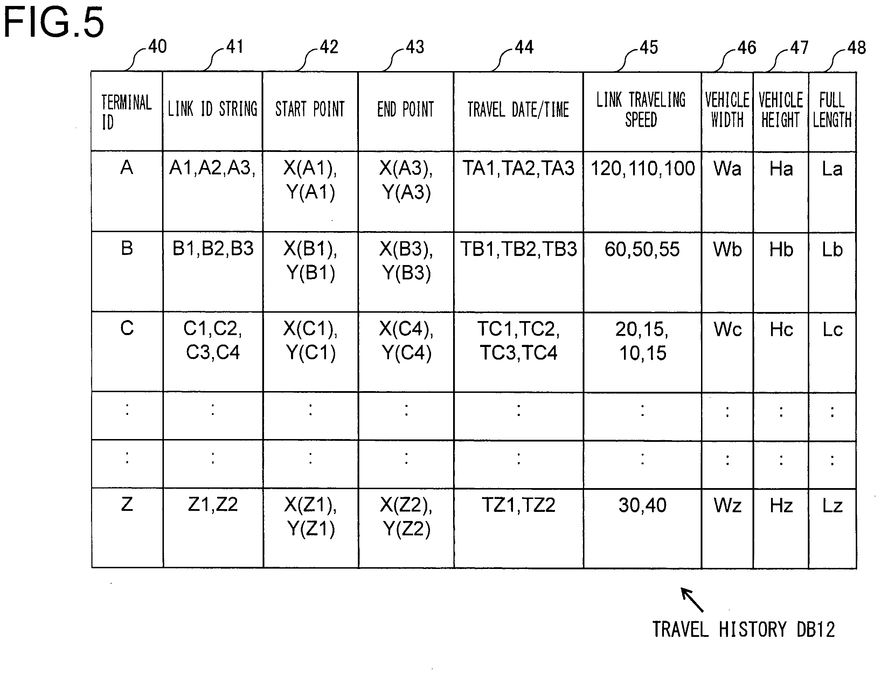

Fig. 5 is a diagram presenting an example of data that may be accumulated in the travel history DB 12. Travel history information, compiled in a specific format such as that shown in Fig. 5, is accumulated in the travel history DB 12. The travel history information includes information pertaining to the route and information pertaining to the vehicle characteristics. As shown in Fig. 5, data, each set of which includes a terminal ID 40, a link ID string 41, a start point 42, an end point 43, a travel date/time 44, a link traveling speed 45, a vehicle width 46, a vehicle height 47, a full length 48 and the like, are stored in the travel history DB 12.

The terminal ID 40 is a unique ID assigned to each in-vehicle terminal device 2 and is recorded so as to allow the particular terminal device to be uniquely identified. As the link ID string 41, a string of link IDs indicating the road traveled by the moving body 20 is recorded. The start point 42 and the end point 43 are respectively expressed by the coordinates of the travel start point and the coordinates of the travel end point. The travel date/time 44 indicates the travel date/time at which the road represented by each link ID has been traveled. The link traveling speed 45 indicates the speed at which the road segment corresponding to each link ID has been traveled. The information corresponding to the vehicle characteristics determined in step S230 in Fig. 4 is recorded as the vehicle width 46, the vehicle height 47 and the full length 48.

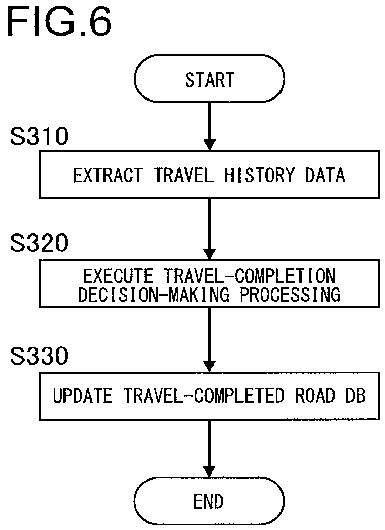

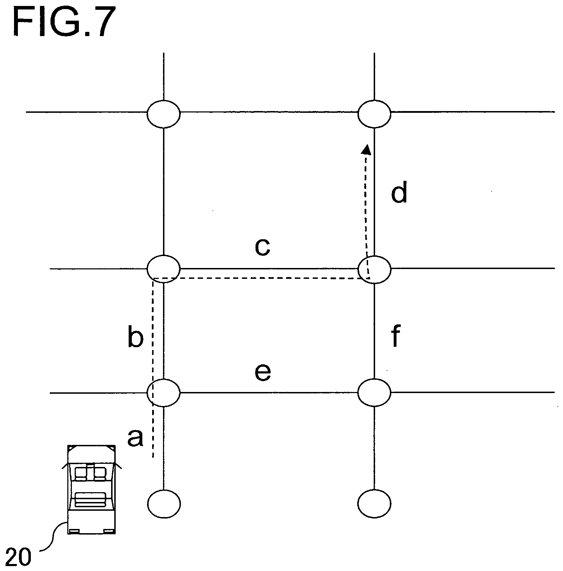

Fig. 6 presents a flowchart of processing that may be executed by the travel-completion decision-making/travel-completion information generation unit 13 in the center device 1. In step S310, the travel-completion decision-making/travel-completion information generation unit 13 extracts data pertaining to travel history in the travel history DB 12. In step S320, the link ID of each link traveled from the starting end of the link through the terminating end of the link and each interlink segment with a travel-completed record are identified based upon the extracted travel history data. In reference to Fig. 7, an example of decision-making processing that may be executed by the travel-completion decision-making/travel-completion information generation unit 13 to decide whether or not travel has been completed will be explained.

Interlink travel-completed links are defined as follows. When a vehicle has travelled from one link to another link connected with each other, an interlink travel-completed record indicating that the vehicle has traveled from the one link to the other link is stored.

Fig. 7 illustrates how the decision-making processing may be executed by the travel-completion decision-making/travel-completion information generation unit 13 to decide whether or not travel has been completed. The travel-completion decision-making /travel-completion information generation unit 13 makes a decision as to whether or not travel is possible between links as well as whether or not travel is possible on individual links by analyzing the data stored in the travel history DB 12.

The moving body 20 may start at a point on a link a, travel through links b and c and stop at a point on a link d, as indicated by the dotted line along the roads shown in Fig. 7. Under these circumstances, the travel-completion decision-making/travel-completion information generation unit 13 obtains travel history data, indicating that the moving body 20 having departed a point on the link a has traveled through the links b and c and has stopped at a point on the link d, from the travel history DB 12. The travel-completion decision-making/travel-completion information generation unit 13 decides that the links b and c, through which travel has been completed, are travel-completed links with travel-completed records. In addition, the travel-completion decision-making/travel-completion information generation unit 13 decides that the links b -> c and c -> d are interlink travel-completed links with interlink travel-completed records. The travel-completion decision-making/travel-completion information generation unit 13 decides that travel is enabled on the links b and c and that interlink travel is enabled between the links b -> c and between the links c -> d. Furthermore, the moving body has not finished traveling through the link a and the link d and accordingly, they are not determined to be travel-completed links. The travel-completion decision-making/travel-completion information generation unit 13 executes the decision-making processing so as to decide whether or not travel has been completed in this manner.

In step S330 in Fig. 6, sets of travel-completion information generated based upon the decision-making results provided by the travel-completion decision-making/travel-completion information generation unit 13 are recorded into the travel-completed road DB 14, thereby updating the travel-completed road DB 14. The sets of travel-completion information include information pertaining to travel-completed links and information pertaining to interlink segments with interlink travel-completed records.

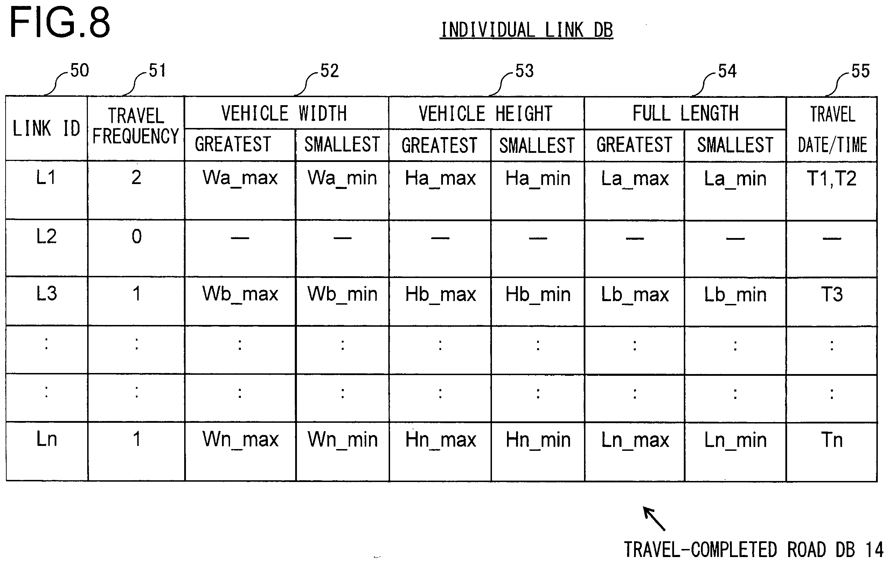

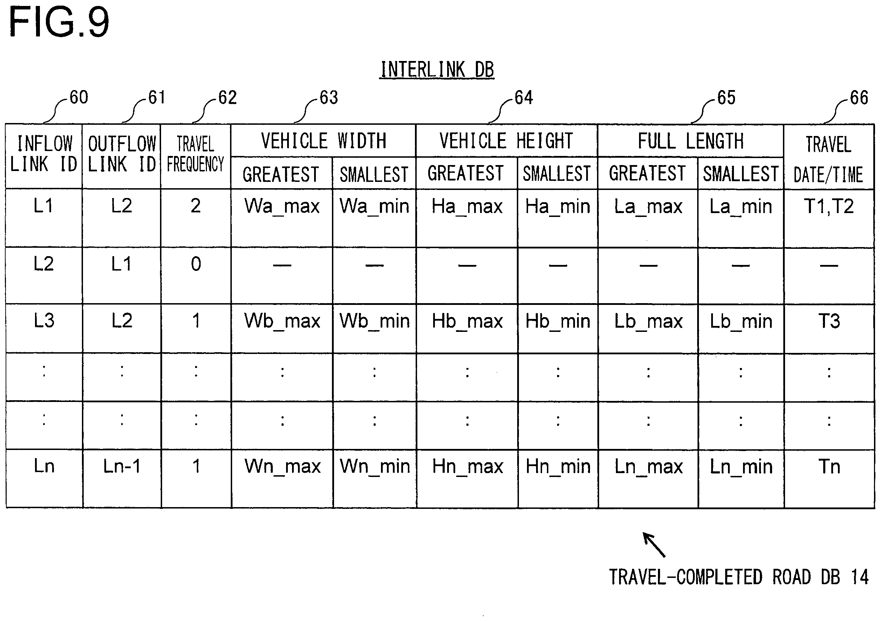

Fig. 8 and Fig. 9 each present an example of data that may be accumulated in the travel-completed road DB 14. The travel-completed road DB 14 includes an individual link DB where sets of link travel-completion information are stored and an interlink DB where sets of interlink travel-completion information are stored. Fig. 8 presents an example of data that may be accumulated in the individual link DB whereas Fig. 9 presents an example of data that may be accumulated in the interlink DB.

In the individual link DB, data, each set of which includes a link ID 50, a travel frequency 51, a vehicle width 52, a vehicle height 53, a full length 54, a travel date/time 55 and the like, are stored in a format such as that shown in Fig. 8. The link ID 50 is a unique ID enabling identification of a road (link) defined in the map DB 15. The travel frequency 51 indicates the number of times a decision has been made in step S320 in Fig. 6 that the particular link has been traveled from its starting end through its terminating end. The vehicle width 52 indicates the greatest and smallest vehicle widths of the vehicles that have traveled on the link. The vehicle height 53 indicates the greatest and smallest vehicle heights of the vehicles having traveled on the link. The full length 54 indicates the greatest and smallest full lengths of the vehicles having traveled on the link.

In the interlink DB, data, each set of which includes an inflow link ID 60, an outflow link ID 61, a travel frequency 62, a vehicle width 63, a vehicle height 64, a full length 65 and a travel date/time 66 are stored in a format such as that shown in Fig. 9. The combination of the inflow link ID 60 and the outflow link ID 61 expresses a unique connection relationship between the links indicated by the link IDs. The travel frequency 62 indicates the number of times the moving body has been determined, through step S320 in Fig. 6, to have completed interlink travel from the link indicated by the inflow link ID 60 to the link indicated by the outflow link ID 61. The vehicle width 63 indicates the greatest and smallest vehicle width of vehicles having completed interlink travel from the link indicated by the inflow link ID 60 to the link indicated by the outflow link ID 61. The vehicle height 64 indicates the greatest and smallest vehicle height of vehicles having completed interlink travel from the link indicated by the inflow link ID 60 to the link indicated by the outflow link ID 61. The full length 65 indicates the greatest and smallest vehicle full length of vehicles having completed interlink travel from the link indicated by the inflow link ID 60 to the link indicated by the outflow link ID 61.

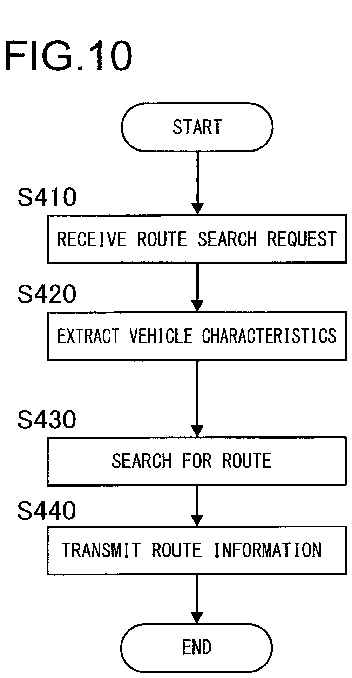

Fig. 10 presents a flowchart of route search processing that may be executed in the center device 1 in response to a route search request received thereat from the in-vehicle terminal device 2.

In step S410, the center device 1 receives a route search request issued by the in-vehicle terminal device 2 and then the operation proceeds to step S420. In step S420, the center device 1 extracts the vehicle characteristics corresponding to the in-vehicle terminal device 2 based upon the vehicle information received from the in-vehicle terminal device 2, before the operation proceeds to step S430. The center device 1 sets the extracted vehicle characteristics indicating the vehicle width and the like as one of the search conditions.

In step S430, the center device 1 searches for a route with the least cost based upon a route search algorithm such as Dijkstra's algorithm by referencing the map DB 15, the traffic information DB 16 and the travel-completed road DB 14. The costs stored in correspondence to the individual links in the traffic information DB 16 are set so that the cost of a link stored as a travel-completed link in the travel-completed road DB 14 is lowered. The cost of a link that is not stored as a travel-completed link in the travel-completed road DB 14, in contrast, is set higher. Likewise, the interlink cost of an interlink segment stored as interlink travel-completed links is lowered whereas the interlink cost of an interlink segment that is not stored as interlink travel-completed links is set higher.

For instance, the route resulting from the search may include an interlink route segment from a link h -> a link i. In this situation, the link cost is set lower if the travel-completed road DB 14 holds an interlink travel-completed record for the link h -> link i but the link cost is set higher if it does not hold an interlink travel-completed record for the link h -> link i. Through these measures, it is ensured that roads with travel-completed records are selected with priority. It is to be noted that the costs may be adjusted in correspondence to the travel frequency.

When searching for a route from the start point to the destination with the least cost, a road with no travel-completed record may be chosen as a route candidate. However, such a road with no travel-completed record may be disqualified as a route candidate by raising the link cost so as to ensure that a route search is executed only in conjunction with roads having travel-completed records.

Such cost adjustments may be made based upon whether or not there is a travel-completed record when, for instance, "travel-completion factoring" is set as a search condition.

In addition, when a vehicle width, a vehicle height, a full length, a travel duration and the like are set as search conditions, link costs should be adjusted as follows. When a specific vehicle width or the like is set as a search condition, the link cost or the interlink cost for a link or an interlink segment with no travel-completed record for a vehicle having the specified vehicle width or the like, is set higher even if the travel frequency indicates a value of 1 or greater.

When a specific period is set as a search condition, the link cost or the interlink cost for a link or an interlink segment with no travel-completed record during the specified period is set higher based upon, for instance, the travel date/time data or the like.

Furthermore, if "travel-duration priority" or "distance priority", instead of "travel-completion factoring" is set as a search condition, cost adjustments are not made based upon the travel frequencies indicated in the travel-completed road DB 14 so as to enable a route search by giving priority to the travel time or the travel distance.

In step S440, the center device 1 transmits route information, generated as recommended route data 119 based upon the search results, to the in-vehicle terminal device 2. Once the route information is transmitted to the in-vehicle terminal device 2, the center device 1 ends the processing shown in Fig. 10. It is to be noted that the center device 1 may also transmit information indicating links with travel-completed records present near the route, as well as the route information expressing the route from the start point to the destination. The route information thus transmitted is received at the in-vehicle terminal device 2 in step S150 in Fig 3.

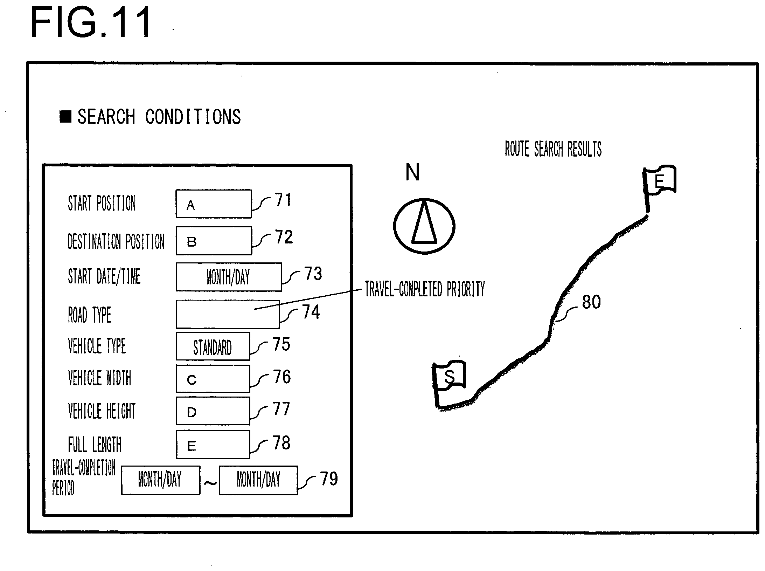

Fig. 11 presents an example of a display screen that may be brought up at the display unit 26 of the in-vehicle terminal device 2. Based upon the route information received at the in-vehicle terminal device 2, the route search results and the search conditions are displayed as shown in Fig. 11 at the display unit 26. In the example presented Fig.11, a recommended route 80 indicated in the route information transmitted from the center device 1 is displayed in a route search results display area. It is to be noted that the recommended route 80 may be displayed by switching the display mode in correspondence to the travel frequency (by switching the display color, by switching the display transmittance, by switching the display line thickness or the like). In addition, the search conditions set for calculation of the recommended route 80 are indicated on the left side of the screen in Fig. 11. Search conditions may be selected for, for instance, a start position 71, a destination position 72, a start date/time point 73, a road type 74, a vehicle type 75 used to set a specific vehicle type, a vehicle width 76 used to specify a vehicle width, a vehicle height 77 used to specify a vehicle height, a full length 78 used to specify a full length and a travel-completion period 79. The road type 74 indicates a search condition pertaining to a preferred road type for travel, and may indicate priority given to roads with travel-completed records. The travel-completion period 79 may be specified in units of days or hours or as a period of specific weather conditions, and a route search is executed by referencing the travel complete information updated during the specified period.

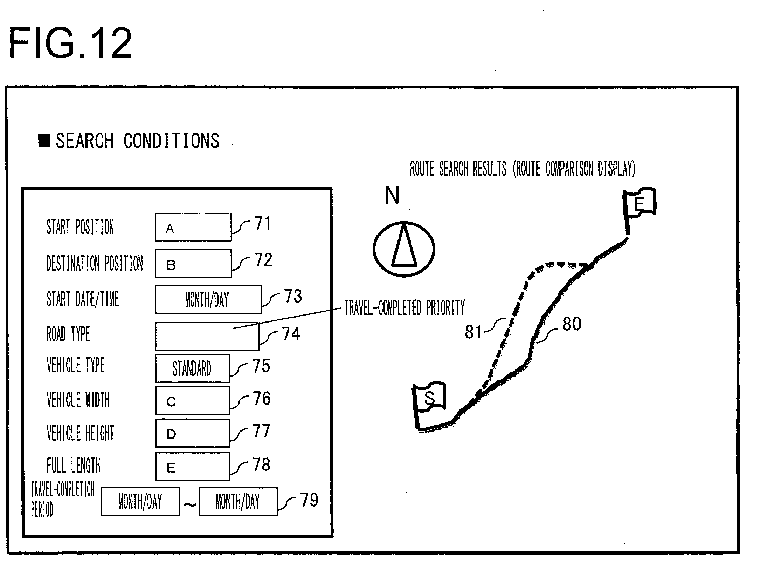

Fig. 12 presents another example of a display screen that may be brought up at the display unit 26 in the in-vehicle terminal device 2. In the example presented in Fig. 12, a recommended route 80 calculated under the travel-completed priority search condition and a recommended route 81 calculated under the travel-duration priority condition are displayed together for comparison. The driver is able to select a desirable route from the recommended routes resulting from the searches executed under a plurality of search conditions such as the travel-completed priority condition and the travel-duration priority condition by referencing the information on display.

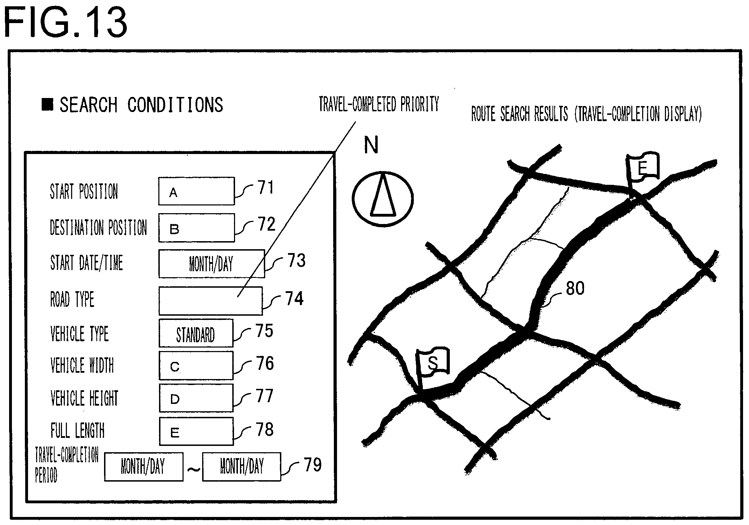

Fig. 13 presents yet another example of a display screen that may be brought up at the display unit 26 in the in-vehicle terminal device 2. In the example in Fig. 13, information on roads with travel-completed records, present around a recommended route 80, which is included in the route information transmitted from the center device 1, is displayed together with the recommended route 80. In Fig. 13, the roads with travel-completed records are displayed at three different levels; travel-completed high, travel-completed intermediate and travel-completed low, based upon their travel frequencies. In the display example in Fig. 13, a road with high travel-completed records (i.e., the recommended route 80) is displayed with a bold line and a road with low travel-completed records is displayed as a thin line. A road with no travel-completed record is not displayed. Conditions such as the vehicle type 75, the vehicle width 76, the vehicle height 77, the full length 78 and the travel-completion period 79 are set, and only roads with travel-completed records under these conditions are displayed.

The following advantages and operations are achieved through the embodiment described above.
(1) The navigation system, which guides a moving body 20 to a destination, including a plurality of in-vehicle terminal devices 2, each installed in one of a plurality of moving bodies 20, and a center device 1 engaged in communication with the plurality of in-vehicle terminal devices 2 via a communication line. The center device 1 includes a travel-completion decision-making/travel-completion information generation unit 13 that generates travel-completion information pertaining to travel-completed records based upon information related to traveling conditions of one of the plurality of moving bodies 20, a travel-completed road DB 14 where sets of the travel-completion information for the plurality of moving bodies 20 are stored and a route search unit 17 that searches for a recommended route to a destination based upon the sets of the travel-completion information. The in-vehicle terminal devices 2 each guide the corresponding moving body 20 to the destination based upon the recommended route.
   In the embodiment, travel-completion information for the plurality of moving bodies 20 is collected and a recommended route is searched by taking into consideration sets of the travel-completion information. As a result, the recommended route calculated based upon travel-completed records of a plurality of vehicles can be delivered to the in-vehicle terminal device 2. This, in turn, makes it possible to provide guidance through a safe route to the destination. For instance, route guidance can be provided by avoiding a road where traffic has been restricted due to a traffic accident or an element (such as flooding or a landslide) other than a traffic accident. In addition, since a search for a recommended route is executed based upon travel-completed records of a plurality of vehicles, guidance through a route assuring ease of travel for the subject vehicle, even on roads on which the subject vehicle has never traveled, as well as on roads on which the subject vehicle has traveled before or through an area where the subject vehicle has previously traveled, can be provided.
(2) The route search unit 17 searches for a recommended route to the destination based upon information pertaining to the moving body 20 for which guidance to the destination is to be provided, in addition to the sets of the travel-completion information. In the embodiment, a recommended route is searched by taking into consideration vehicle characteristics such as the vehicle type, the vehicle width and the vehicle length of the moving body 20 for which guidance is to be provided. Thus, an optimal recommended route ideal for the vehicle for which guidance is to be provided can be determined.
(3) The route search unit 17 searches for a recommended route to the destination based upon the sets of the travel-completion information pertaining to travel-completed records collected during a specified period. In the embodiment, information pertaining to travel dates/time points corresponding to a plurality of moving bodies 20 is stored in the travel-completed road DB 14. The center device 1 executes a route search for a route to the destination by taking into consideration links and interlink segments with travel-completed records collected during the period indicated as a search condition. As a result, a route searched by using only fresh information, having been updated during the specified period alone, is provided to the in-vehicle terminal device 2. For instance, travel-completion information collected after a disaster may be exclusively used so as to be able to provide guidance through a safe route by avoiding a road where a landslide or the like has occurred.
(4) The route search unit 17 searches for a recommended route to the destination based upon the sets of the travel-completion information pertaining to travel-completed records corresponding to specified vehicle information. Namely, the center device 1 in the embodiment searches for a recommended route by taking into consideration the vehicle width or the like specified as a search condition. As a result, an optimal recommended route ideal for a vehicle matching the specified vehicle width or the like can be determined through the search.
(5) The travel-completion information includes at least information related to travel-completed links each having been traveled from the starting end to the terminating end thereof or optionally, in an aspect not forming part of the claimed invention, information pertaining to interlink segments with travel-completed records. Through these measures, a recommended route can be searched by taking into consideration the travel-completed link information or the interlink travel-completed link information. In the embodiment in which a recommended route is calculated in conjunction with the interlink travel-completion information, guidance can be provided through a route determined by factoring in, for instance, traffic regulations such as no left/right turns, the presence of median strips and the like.

The following may be adopted in combination with the embodiment described above.

### (Variation 1)

In the embodiment described above, the recommended route is transmitted to the in-vehicle terminal device 2 installed the moving body 20. However, the recommended route may be transmitted to a recipient other than the in-vehicle terminal device 2. For instance, the recommended route may instead be transmitted to a personal computer or the like at home, connected to the Internet. In this case, the recommended route can be transmitted in advance to the user while he is planning a trip.

### (Variation 2)

In the embodiment described above, link costs and interlink costs are set based upon the travel date/time data accumulated in the travel-completed road DB 14 and the specified travel-completion period. However, sets of travel-completion information may be collected in correspondence to various time slots, different days of the week, different seasons or the like, and link costs and interlink costs may be set based upon a specified time slot or the like. In this case, a recommended route calculated by taking into consideration time-slot traffic regulations, regulations imposed on specific days of the week, seasonal traffic regulations (winter road closures, etc.) affecting traffic conditions, for instance, can be transmitted.

### (Variation 3)

In the embodiment described above, information pertaining to the traveling conditions of the moving body 20 is generated based upon the detection results obtained via the sensor 21. However, information pertaining to the traveling conditions of the moving body 20 may be generated by using signals such as vehicle velocity pulses, taken in from the moving body 20 as well. The information pertaining to the traveling conditions of the moving body 20, generated based upon the detection results provided via the vehicle speed sensor, vehicle velocity pulse signals or the like can be stored as probe data in the probe data storage unit 22.

While the invention has been particularly shown and described with respect to a preferred embodiment and variations thereof by referring to the attached drawings, the present invention is not limited to these but defined by the claims.

## Claims

1. A center device (1) engaged in communication via a communication line (3) with a plurality of terminal devices (2) each installed in one of a plurality of moving bodies (20), comprising:
a travel-completion information generation unit (13) that is adapted to generate travel-completion information based upon information related to traveling conditions of each moving body (20) transmitted from the terminal device (2) in the moving body (20);
a storage unit (12, 14) in which sets of the travel-completion information corresponding to the plurality of moving bodies (20) are stored; and
a route search unit (17) that is adapted to search for a recommended route to a destination based upon the travel-completion information,
**characterized in that** the travel-completion information includes travel-completed link information as travel-completed records pertaining to links each having been traveled from a starting end to a terminating end thereof by one of the plurality of moving bodies (20).

2. The center device (1) according to claim 1, wherein the route search unit (17) is adapted to search for a recommended route to the destination based upon information related to the moving body (20) to be guided to the destination, in addition to the sets of the travel-completion information.

3. The center device (1) according to claim 1 or claim 2, wherein the route search unit (17) is adapted to search for a recommended route to the destination based upon the sets of the travel-completion information pertaining to travel-completed records collected during a specified period.

4. The center device (1) according to claim 1 or claim 2, wherein the route search unit (17) is adapted to search for a recommended route to the destination based upon the sets of the travel-completion information pertaining to travel-completed records corresponding to specified vehicle information.

5. A navigation system which is adapted to guide a moving body (20) to a destination, comprising:
a plurality of terminal devices (2), each installed in one of a plurality of moving bodies (20); and
the center device (1) according to any of claims 1 through 5 engaged in communication with the plurality of terminal devices (2) via a communication line (3),
wherein the terminal device (2) is adapted to guide the moving body (20) to the destination based upon the recommended route.

## Patentansprüche

1. Zentrale Vorrichtung (1), die über eine Kommunikationsleitung (3) in Kommunikation verbunden ist mit mehreren Endvorrichtungen (2), die jeweils in einem von mehreren bewegten Körpern (20) installiert sind, mit
einer Reisevollendungsinformations-Erzeugungseinheit (13), die dazu ausgelegt ist, Reisevollendungsinformation basierend auf Information zu erzeugen, die sich auf Reisebedingungen jedes bewegten Körpers (20) bezieht, die von der Endvorrichtung (2) in dem bewegten Körper (20) gesendet wurde,
einer Speichereinheit (12, 14), in der Einheiten der Reisevollendungsinformation entsprechend den mehreren bewegten Körpern (20) gespeichert werden, und
einer Routensucheinheit (17), die dazu ausgelegt ist, basierend auf der Reisevollendungsinformation nach einer empfohlenen Route zu einem Ziel zu suchen,
**dadurch gekennzeichnet, dass** die Reisevollendungsinformation Reisevollendungs-Verknüpfungsinformation als Reisevollendungsaufzeichnungen enthält, die sich auf Verknüpfungen erstrecken, die jeweils von einem Startpunkt zu einem Endpunkt davon durch einen der mehreren bewegten Körper (20) bereist wurden.

2. Zentrale Vorrichtung (1) nach Anspruch 1, wobei die Routensucheinheit (17) dazu ausgelegt ist, zusätzlich zu den Einheiten der Reisevollendungsinformation, basierend auf Information bezüglich des bewegten Körpers (20), der zu dem Ziel zu führen ist, nach einer empfohlenen Route zu dem Ziel zu suchen.

3. Zentrale Vorrichtung (1) nach Anspruch 1 oder 2, wobei die Routensuchinformation (17) dazu ausgelegt ist, basierend auf den Einheiten der Reisevollendungsinformation, die sich auf die während einer spezifizierten Zeitspanne gesammelten Reisevollendungsaufzeichnungen erstrecken, nach einer empfohlenen Route zu dem Ziel zu suchen.

4. Zentrale Vorrichtung (1) nach Anspruch 1 oder 2, wobei die Routensuchinformation (17) dazu ausgelegt ist, basierend auf den Einheiten der Reisevollendungsinformation, die sich auf die der spezifizierten Fahrzeuginformation entsprechenden Reisevollendungsaufzeichnungen erstrecken, nach einer empfohlenen Route zu dem Ziel zu suchen.

5. Navigationssystem, das dazu ausgelegt ist, einen bewegten Körper (20) zu einem Ziel zu führen, mit
mehreren Endvorrichtungen (2), die jeweils in einem der mehreren bewegten Körper (20) installiert sind, und
der zentralen Vorrichtung (1) nach einem der Ansprüche 1 bis 4, die über eine Kommunikationsleitung (3) in Kommunikation mit den mehreren Endvorrichtungen (2) verbunden ist,
wobei die Endvorrichtung (2) dazu ausgelegt ist, den bewegten Körper (20) basierend auf der empfohlenen Route zu dem Ziel zu führen.

## Revendications

1. Système central (1) engagé en communication par l'intermédiaire d'une ligne de communication (3) avec une pluralité de dispositifs terminaux (2) installés chacun dans un d'une pluralité de corps en mouvement (20), comprenant :
une unité (13) de génération d'informations d'exécution de parcours qui est adaptée à générer des informations d'exécution de parcours sur la base d'informations se rapportant à des conditions de parcours de chaque corps en mouvement (20) transmises depuis le dispositif terminal (2) dans le corps en mouvement (20) ;
une unité (12, 14) de stockage dans laquelle des ensembles des informations d'exécution de parcours correspondant à la pluralité de corps en mouvement (20) sont stockés ; et
une unité (17) de recherche d'itinéraire qui est adaptée à rechercher un itinéraire recommandé jusqu'à une destination sur la base des informations d'exécution de parcours,
**caractérisé en ce que** les informations d'exécution de parcours incluent des informations de liaisons de parcours exécutés comme des enregistrements de parcours exécutés se rapportant à des liaisons ayant chacune été parcourues d'une extrémité de départ à une extrémité de fin de celles-ci par un de la pluralité de corps en mouvement (20).

2. Système central (1) selon la revendication 1, dans lequel l'unité (17) de recherche d'itinéraire est adaptée à rechercher un itinéraire recommandé jusqu'à la destination sur la base d'informations se rapportant au corps en mouvement (20) devant être guidé jusqu'à la destination, en plus des ensembles des informations d'exécution de parcours.

3. Système central (1) selon la revendication 1 ou la revendication 2, dans lequel l'unité (17) de recherche d'itinéraire est adaptée à rechercher un itinéraire recommandé jusqu'à la destination sur la base des ensembles des informations d'exécution de parcours se rapportant à des enregistrements de parcours exécutés recueillis sur une période spécifiée.

4. Système central (1) selon la revendication 1 ou la revendication 2, dans lequel l'unité (17) de recherche d'itinéraire est adaptée à rechercher un itinéraire recommandé jusqu'à la destination sur la base des ensembles des informations d'exécution de parcours se rapportant à des enregistrements de parcours exécutés correspondant à des informations de véhicule spécifiées.

5. Système de navigation qui est adapté à guider un corps en mouvement (20) jusqu'à une destination, comprenant :
une pluralité de dispositifs terminaux (2) installés chacun dans un d'une pluralité de corps en mouvement (20) ; et
le dispositif central (1) selon l'une quelconque des revendications 1 à 5 engagé en communication avec la pluralité de dispositifs terminaux (2) par l'intermédiaire d'une ligne de communication (3),
dans lequel le dispositif terminal (2) est adapté à guider le corps en mouvement (20) jusqu'à la destination sur la base de l'itinéraire recommandé.
